# EUROPEAN PATENT SPECIFICATION

(11) **EP 0 967 186 B1**
(45) Date of publication and mention of the grant of the patent: **02.11.2006**
(21) Application number: 99302141.9
(22) Date of filing: 19.03.1999
(51) Int. Cl.: C04B 20/10, C08L 95/00, E01C 7/18, E01C 7/35

(54) **A particular material suitable for use in construction and methods of making same**
Teilchenfoermiges Material zur Verwendung in der Bautechnik und Herstellungsverfahren
Matière particulaire à utiliser dans la construction et procédés pour sa fabrication

(30) Priority: 21.03.1998 GB 9805998; 27.08.1998 GB 9818758
(43) Date of publication of application: 29.12.1999
(73) Proprietor: Liverpool John Moores University School of the Built Environment, Liverpool L3 5UG (GB)
(72) Inventor: Al-Nageim, Hassan Dr. c/o School of the Built Env., Liverpool l3 5UG (GB)

(56) References cited:
- DE-B- 1 281 338
- FR-A- 467 393
- FR-A- 1 255 396
- FR-A- 1 469 702
- BAYOMY FOUAD M: "Development and analysis of cement-coated aggregates for asphalt mixtures" SYMPOSIUM ON EFFECTS OF AGGREGATES AND MINERAL FILLERS ON ASPHALT MIXTURE PERFORMANCE;SAN DIEGO, CA, USA DEC 10 1991, no. 1147, 10 December 1991 (1991-12-10), pages 19-34, XP002108078 ASTM Spec Tech Publ;ASTM Special Technical Publication 1992 Publ by ASTM, Philadelphia, PA, USA
- CHEMICAL ABSTRACTS, vol. 108, no. 18, 2 May 1988 (1988-05-02) Columbus, Ohio, US; abstract no. 155497q, K. TAGAYA ET AL.: page 326; XP000157992 & JP 06 302844 A (MITSUBISHI HEAVY IND.)

## Description

The present invention relates to a particulate material comprising modified aggregate particles suitable for use in the construction of, for example, the surfaces (e.g. flexible pavement) for city streets, highways, airfields and other construction applications, and is concerned with a method of modifying such aggregates to improve their characteristics and usefulness in this field.

The current practice in the pavement construction industry is to use crushed rock aggregates of "suitable" characteristics. Although natural uncrushed rock aggregate, recycled aggregate and conventionally "unsuitable" crushed rock aggregate exist in large quantities and there is a huge demand for their use in the construction industries, they are not used currently in pavement construction because of the inability at present to produce reasonable quality pavement from these materials because of their inherent nature. For example, the surfaces of most natural uncrushed aggregates (e.g. from riverbeds, deserts etc.) are too smooth for pavement construction purposes, as described below.

Figures from the British Aggregate Construction Materials Industries (BACMI) (Statistical Yearbook 1994, BACMI, London, 1994) show that in a sample period, 27.4 million tonnes of crushed rock, compared to only 0.6 million tonnes of uncrushed gravel, was used in road construction.

Furthermore, it is being realised that the environmental impact of development within the community has reached unacceptably high levels. In particular, the crushed rock aggregates presently used in pavement construction have a negative environmental impact in that their production involves quarrying, i.e. dynamiting mountains and crushing the resultant broken rock into the desired particle size. Consequently, there has been an increased desire to produce and repair roads with long lasting, more environmentally friendly materials. In particular, an environmental benefit could be achieved if it were possible to make use of (presently unsuitable) natural aggregates from river beds and deserts etc.

However, these materials are still required to deliver a comfortable, safe ride under increasingly severe conditions.

Throughout the transportation industry, there is therefore an ongoing need to improve the quality of the materials provided for the construction of flexible pavements. Flexible bituminous pavements constitute the largest part of the transportation network facility in many countries. Therefore, the performance and durability of bituminous material requires continual upgrading to meet the socio-economic and environmental demands of the transportation network user.

Some of the problems associated with these currently unusable aggregate materials, in particular natural gravels, are now discussed.

### 1.0 Bituminous mixes containing natural uncrushed aggregate quickly age and become brittle

1.1. A report by Griffith and Kallas (Aggregate Void Characteristics in Asphalt Paving Mixes, Griffith, J.M. and Kallas, B.F. Proceedings of the HRB, Vol. 36, 1957) stated that mixtures containing natural aggregate would generally require less asphalt than those containing crushed stone aggregate. This was attributed to the fact that natural gravels develop lower aggregate voids when compared to crushed stone mixes having the same gradation. This property, although appearing beneficial, would indicate a tendency for uncrushed natural aggregate asphalts to deform easily under the action of the traffic loads and in the presence of bituminous binder which has to be used at a specified optimum content. In porous mixes and other like mixes, the tendency for an aggregate to require less binder is not desirable as the finished product will quickly age and become brittle. That will reduce the design life of the pavement layers.

1.2. A study by Curtis et al. (Fundamental Properties of Asphalt-Aggregate Interactions Including Adhesion and Adsorption, Strategic Highways Research Program (SHRP), Report A-341, National Research Council, Washington DC, Main Contributors: Christine W. Curtis - NCAT/Auburn University, Keith Ensely - Western Research Institute, Jon Epps - University of Nevada at Reno, 1993) showed that when asphalt was desorbed from a selection of Materials Reference Library (MRL) aggregates, desorption of asphalt occurred in the following order: Gravels > Limestones > Greywackes > Granites. Gravel asphalts appear therefore to be the most vulnerable to attack from the ingress of water into the mix. This indicates that the bond between asphalt and either round gravel aggregates or gravel with a polished surface is poor compared to the bond between crushed limestone or granite aggregates and asphalts.

1.3. A further study by Curtis et al. ("Asphalt/Aggregate Mix Susceptibility Test Based on Chemical and Physical Bond Strength") analysed the Tensile Stress Ratio (TSR) of various MRL aggregates with the Modified Lottman Test. The two gravel aggregates exhibited some of the lowest TSR values of all of the aggregates tested, indicating a poor chemical and physical bond.

### 2.0 Bituminous pavement containing natural uncrushed aggregate lacks stability and leads to rutting

2.1. Kandal, Khatri and Motter (Evaluation of Particle Shape and Texture of Mineral Aggregates and Their Blends), Kandhal, P.S. Khatri, M.A., Motter, J.B. NCAT Report No. 92-4 Presented at the Annual Meeting of the Association of Asphalt Paving Technologists (AAPT) in Charleston, SC, 1992 showed that using Lead shot, in both its natural rounded shape, and in a flattened form to simulate natural gravel is very undesirable in asphalt mixes. This is because there is no interlocking of the particles that produce stability. This lack of stability leads to visco-elastic flow, more simply referred to as rutting.

2.2. Wedding and Gaynor (The Effects of Using Crushed Gravel as the Coarse and Fine Aggregate in Dense Graded Bituminous Mixes, Wedding, P.A. and Gaynor, R.D. Proceedings of the AAPT, Vol. 30, 1961) reported that when crushed gravel was used in place of uncrushed gravel in a HMA (Hot Mix, or Hot Rolled Asphalt) mixture, an increase in stability of approximately 45 percent could be achieved with the substitution of all crushed aggregate crushed gravel course and fine aggregate by natural sand and gravel.

2.3 Field (The Importance of Percent Crushed in Course Aggregate as Applied to Bituminous Pavements, Field, F. Proceedings of the AAPT, Vol. 27, 1958) studied the influence of the percentage of the crushed particles of the coarse aggregate in HMA mixtures. He reported that Marshall stability of an HMA mix changed little for 0 to 35 percent crushed particles and then increased consistently as the percentage of crushed particles increased to 100 percent. The average stability was reported to be 55 percent higher for 100 percent crushed particles as compared to that of 35 percent crushed particles.

2.4 Campen and Smith (A Study of the Role of Angular Aggregates in the Development of Stability of Bituminous Mixes, Campen, W.H. and Smith, J.R. Proceedings of the AAPT, Vol. 17, 1948) reported an increase in stability of 30 to 190 percent by using crushed aggregate as compared to natural rounded aggregate in HMA mixtures. They measured the stability by Hubbard-Field and Bearing-Index tests.

3.0 Finally, a paper has been published on research in hot climates to mix crushed aggregate with dry cement powder for use in asphalt mixes. The material was not found to have very advantageous properties, however.

Furthermore FR-1469702 and a paper of F. Bayomy is ASTM No 1147, 10/12/1991 XP 002108078 describe cemenf-coated aggregates for asphalt or bitumes mixtures.

It would be desirable therefore if a way could be found to modify aggregates of types not currently considered useable, especially natural uncrushed aggregate, so that they could be used satisfactorily for construction purposes, in particular construction of surfaces e.g. pavement.

According to a first aspect of the present invention there is provided a particulate material as set out in claim 1.

The aggregate particles comprise natural uncrushed aggregate, rock, recycled aggregate or artificial aggregate, but they can also comprise crushed aggregate and or natural uncrushed aggregate would include natural gravel.

In the context of the present invention, the term cement includes standard mineral-based powders used for construction purposes e.g. as used in concrete, mortar, etc. which when mixed with water set to a hard mass. Preferably, the cement contains calcium minerals.

The cement comprises limes, silica, alumina, silicates, aluminates, aluminosilicates, and/or aluminoferrates. One example is Portland cement.

References to set or setting include the initial setting process of the cement coating.

The present invention is advantageous in that providing aggregate particles with a cement paste coating enables aggregate particles of low quality, especially natural uncrushed aggregate but also artificial, recycled and some crushed aggregates, to be brought up to a recognised standard for use in flexible pavement construction by means of a cheap and simple coating process. It also enables aggregate already of an acceptable quality (e.g. most crushed aggregate) to have its performance enhanced.

A first advantageous effect of the provision of the coating of cement paste (which contains lime) is to alter the characteristics of the aggregate surface from being hydrophilic or oleophobic (oil hating) to being a more oleophilic (oil loving) surface, which has properties similar to those of a lime-rich aggregate. Lime rich or basic (alkalinic) uncoated aggregates are the least oleophobic and hence are the most likely to bond well with bitumen, as explained in the study of Curtis et al. referred to in ref 1.2. above.

In the same way, the cement coated aggregate also generally forms a better bond with bitumen and/or asphalt binder and enables an increased percentage of binder to be retained (adsorbed) on the coated aggregate results are shown hereinafter.

The foregoing advantage results in the aggregate asphalt mixes containing the new coated aggregates generally requiring more binder than the unacceptable e.g. natural uncrushed aggregate, and the finished product therefore generally ages less quickly, loses bitumen less quickly and is less liable to become brittle with time, ie. the resulting product generally has a long design life for flexible and composite pavements for city streets, highways, roads and airfields.

The fact that mixtures containing cement coated natural aggregate would generally require more asphalt binder than those containing uncoated natural or unsuitable crushed stone aggregate is attributed to the fact that natural gravels develop lower aggregate voids when compared to suitable crushed stone mixes having the same gradation. This property, although appearing beneficial, would indicate a tendency for uncrushed natural aggregate asphalts to deform easily if too much binder is included in the mix. Porous mixes are designed so that the maximum amount of bitumen may be retained without binder drainage. Therefore in these mixes, as in those above, the tendency for an aggregate to require less binder is not desirable as the finished product would quickly age and become brittle.

Furthermore, a second advantage of the cement (concrete) coating is that the surface of the aggregate generally becomes rougher (as described hereinafter), particularly when the coating contains small additional hard particles. This is a particular advantage for natural gravels which are smooth and rounded in their natural state. This increased roughness enables a greater degree of mechanical interlocking between adjacent aggregate particles, thereby resulting in increased shear resistance, which results in improved durability and stability since the phenomenon of visco-elastic flow under the action of the traffic loads is substantially reduced. Thus, the problem of "rutting" of pavement surfaces, which exists in particular with natural gravels which are presently unsuitable, can be substantially reduced or even eliminated, when the coated aggregates are used. Therefore the simple expedient of coating natural gravel renders it useable for this application.

A third advantage of the present invention is that natural uncrushed and recycled aggregates are generally recovered with less energy intensive means than quarrying, which produces crushed aggregate, and could therefore be considered more environmentally-friendly. It is envisaged that the long term effect of using coated uncrushed and recycled materials of the present invention will be to reduce the cost and environmental impact of producing and maintaining roads.

The particulate material includes coated particles containing only one aggregate particle. This material is the preferable but non-essential result of separating the coated particles before drying (initial setting) and thereby reducing the amount of "lumps" containing more than one aggregate particle.

Any particle size of aggregate can be used, but preferably the aggregate particles include those with a particle size of ≥ 2.36 mm (excluding the coating). Preferably, in order to create "coarse aggregate" coated material within the meaning of British Standard BS 4987 Part I (1993) for pavement construction use, the aggregate particles include those with a particle size of 2.36 - 50 mm (excluding the coating).

Even better the aggregate particles include those with a particle size of 2.36 - 14 mm (excluding the coating). However, other particle size ranges can be used before coating, for example 2.36 - 6.3 mm, 2.36 - 20 mm, 3.35 - 6.3 mm, 6.3 - 14 mm, 14 - 28 mm, 28 - 37.5 mm and/or 37.5 - 50 mm. In all cases, the particle sizes are measured using the appropriately sized sieves.

Preferably, the final particulate material (after coating) should include that with a particle size of ≥ 3.35 mm. More preferably, it should include that with a particle size of 3.35 - 50 mm, for example 3.35 - 6.3 mm, 6.3 - 14 mm, 14 - 28 mm, 28 - 37.5 mm, and/or 37.5 - 50 mm. Other particle sizes can also be included, however, e.g. 75 - 300 µm and/or 300 µm - 3.35 mm.

Alternatively, the proportion of particles outside the given ranges can be reduced by careful sieving so that the aggregate particles (before coating) or the particulate material (after coating) substantially consist of those with the above particle sizes. For example, to create material within both the "coarse aggregate" (3.35 - 50 mm) and "sub-base" (>50 mm) categories of BS 4987, Part 1, 1993 for road use, the final particulate material after coating should substantially consist of that with a particle size of ≥ 3.35 mm. To create "coarse aggregate" only within the meaning of BS 4987, the final particulate material should substantially consist of that with a particle size of 3.35 - 50 mm.

Ideally, the coating substantially completely surrounds the aggregate particles. Usually, the coating has an average thickness of 0.1 - 6 mm, more usually of 0.5 - 3 mm.

It is advantageous to include various additives in the coating in addition to the cement, such as limes and/or microsilicas. "Lime" or "limes" are hereby defined as Ca(OH)₂, CaO, CaCO3 and other basic calcium compounds, excluding the content of alumina, silica and iron oxide, etc within the calcium containing minerals in cement. In order to maximise the oleophilicity and bitumen bonding properties of the cement coating, the coating preferably has a total lime content of > 64 wt % (more preferably 64 - 67 wt %) of the total dry weight of the cement and additives in the coating. Ordinary Portland Cement (OPC) already contains lime (about 64 wt %), of course, and so it can be seen that additional lime may be advantageous depending on the lime content of the cement used and the end use of the final product. Preferably, Portland cement or rapid-hardening cement will be used.

Preferably, the coating comprises a setting accelerator, a superplasticizer and/or a hardening accelerator. The function of the setting accelerator is to reduce the initial setting time of the cement coating, and thereby to minimise the time during which the coated aggregate particles need to be kept separate. Better, the setting accelerator comprises a mixture of organic and inorganic complex-forming agents. The superplasticizer promotes better cement dispersion. The hardening accelerator promotes improved high early strengths in (for example) the 8 - 24 hr period after coating.

In a highly advantageous embodiment the coating contains additional particulate matter.

The additional particulate matter has a smaller average particle size than that of the aggregate particles, and/or the additional particulate matter includes that with a particle size of 75µm - 2.36 mm or 75 µm - 3.35 mm (e.g. 75 - 300 µm and/or 300 µm - 3.35 mm), and/or the additional particulate matter comprises hard angular particles. The ideal additional particulate matter is sand. Generally, a plurality of these small particles surround the central larger aggregate particle.

This additional small particulate matter can be encapsulated within and/or project from the surface of the coating. The projecting particles greatly increase the roughness and angularity of the final particulate material generally to an average roughness of ≥ 400 µm, as measured by optical surface profile. In this way, the mechanical interlocking and shear resistance properties of the final material are improved further, which further increases the stability and decreases the visco-elastic flow under load of pavement and/or asphalt mixes made with this material. The encapsulated particulate matter serves to increase the strength of the coating.

In comparison, the particulate material (without additional small particulate matter) generally has an average roughness of 100µm, more usually 125 - 400 µm, as measured by optical surface profile. Typically, the average roughness for coated natural uncrushed aggregate is 125 - 200µm or 125 - 180 µm, and for coated crushed aggregate is 200 - 400 µm. This represents a considerable improvement for both natural uncrushed and crushed aggregate, as detailed more fully in the "Test Results" section in Table 1 hereinafter.

According to a second aspect of the present invention there is provided a method of making a particulate material as set out in claim 9.

The method comprises mixing the aggregate particles with cement and water, and preferably also comprises mixing the aggregate particles with additional limes and additional particulate matter as described above and for the same purposes.

1 - 12 wt % of additional limes by weight of dry cement powder used are added, or preferably 1 - 7 wt % of additional limes by weight of dry cement powder used are added. Up to 3 wt % of additional limes may be added for use in road surfacing.

The function of the additional limes is to increase the oleophilicity and bitumen-binding properties of the final particulate material, as described above. The percentages quoted are calculated with this function in mind. Preferably, the method also comprises mixing the aggregate particles with microsilicas and/or Pulverised Fuel Ash (PFA); usually 1 - 12 wt % of microsilicas and/or PFA by weight of dry cement powder used are added. The microsilicas added are in addition to any microsilicas, which might already be present in cement. The method can also comprise mixing the aggregate particles with a setting accelerator, a superplasticizer and/or a hardening accelerator as defined hereinabove.

Ideally, the coated aggregate particles are separated before the cement coating is allowed substantially to reach its initial setting time; more specifically the coated aggregate particles can be separated by passing them through or over one or more rotating and/or vibrating sieves.

This stage helps to make the final coated material particulate, as opposed to a large solid block or mass of set concrete. Use of multiple sieves can divide the coated product into different size fractions if desired.

The method consists of loading the coated aggregate particles onto a conveyor before the cement is allowed substantially to reach its initial setting time. Usually, the conveyor vibrates in such a way as to aid separation of the coated aggregate particles from adjacent coated aggregate particles. This last feature helps to reduce formation of "lumps" containing more than one larger aggregate particle e.g. of ≥ 3.35 mm uncoated size. Usually, the coated aggregate particles are retained on the conveyor for a time sufficient to allow the coating to reach its initial setting at least partially. This reduces "lump" formation when the particulate material is deposited in a hopper.

Preferably, dry powder, for example dry cement and/or accelerating powder, is added to the coated aggregate particles while they are still on the conveyor. When this dry powder contacts the wet coated aggregate particles, it is partially retained in the cement paste and helps to accelerate the initial setting of the cement.

Sometimes, the coated aggregate particles may be passed through or over one or more sieves after conveying. This allows a final grading of the product, possibly into different size fractions and again helps to remove lumps.

According to a third aspect of the present invention there is provided a particulate material made by a method as before described.

According to a fourth aspect of the present invention there is provided a method comprising mixing the said particulate material with an asphalt and/ or bitumen binder. This mixing would normally occur at the road side or at a plant.
According to a fifth aspect of the present invention there is provided a material suitable for use in construction comprising an asphalt and /or bitumen binder and a particulate material of the present invention. A preferable use is in the construction of surfaces (e.g. pavement), such as road or airfield surfaces. Surface in this context means a layer of defined thickness and is not to be construed as meaning only the outer boundary of that layer. The particulate material of the present invention can be used, for example, as a substitute for coarse aggregate within the body of a road surface, or as chippings. Chippings are the last aggregate materials compressed into the road surface. Use of rough cement coated materials of the present invention as chippings may give the road surface improved friction/skid resistance properties as well as the normal advantages.

According to a sixth aspect of the present invention there is provided a method of modifying aggregate materials in order to improve their characteristics for use in pavement construction, wherein the aggregate material is provided with a coating of cement paste. Preferable embodiments are as for a method of making a particulate material of the second aspect of the present invention. Pavement preferably includes road pavement or airfield pavement.

It is noted that the materials and/or methods of the present invention may find a use outside the construction field and the scope of the present invention should not be construed so as to exclude these applications.

### EXAMPLES

A specific embodiment of the invention will now be described, by way of example only, and by reference to the drawings attached hereto, in which:
Fig. la, represents a particle (2) comprising an aggregate particle (4) having a cement coating (6);
Fig. 1b shows particle (8) an embodiment of the present invention, comprising an aggregate particle (10) having a cement coating (12) containing additional particulate matter (14,16) some of which (16) is encapsulated within the coating and some of which (14) projects from the surface (18) of the coating (12).
Figs 2 - 4 are described later in the "Test Results" section.

The coated aggregate is made as follows:

In brief, the cement coating is applied to the aggregates by mixing the latter with the cement and water, with or without additives, in a conventional concrete mixer or any other suitable mixer. The quantities of the materials should be in the amounts specified below. After mixing, the coated aggregates are separated by passing through a gently vibrated sieve or other suitable mechanism and/or dropped onto a vibrating conveyor. After the initial setting time of the cement, conventional conveying techniques are applied and the material will be ready for use.

Details of the method of making the coated aggregate are as follows. Natural uncrushed or crushed aggregate are separated into fractions with particle sizes of 2.36 - 6.3 mm or 3.35 - 6.3 mm, 6.3 - 14 mm, 14 - 28 mm, 28 - 37.5 mm and 37.5 - 50 mm using sieves of the given mesh size. Alternatively, fractions with a larger particle size range (e.g. 2.36 - 14 mm or 2.36 - 20 mm, as measured by the appropriate sieves and as used in the following tests) can be used. Each fraction of aggregate is mixed with dry cement powder, any additives, additional matter and water in a conventional concrete mixer, for the standard time as in the standard concrete-mixing process.

The proportions of aggregate, cement, additives and water are as follows. Cement total content used is limited to 3- 20 % by weight of dry aggregate used - either ordinary Portland cement (OPC), which is cheapest, or rapid-hardening cement (e.g. cement with a high alumina and/or microsilica content). In this specific embodiment, OPC is used with a total content of 10% by weight of dry aggregate used, in which case water is added according to a water: cement ratio of 0.42 (or as according to the relevant International Standard), adjustable to the proportion of the constituents of the product.

Microsilicas and/or PFA, may be used as an additive with total content of 1 - 12 % by weight of dry cement used.

A cement and additives mix with a combined lime content of at least 64 wt %, or alternatively 64 - 67 wt %, should be used in order to increase the oleophilicity of the final coated product and improve bonding to bitumen. "Lime" or "limes" are hereby defined as Ca(OH)₂, CaO, CaCO3 and other basic calcium compounds, excluding the content of alumina, silica and iron oxide etc within the calcium-containing minerals in cement). OPC has a lime content of about 64% or more. Therefore, 1 - 12 wt % or 1 - 7 wt % of extra lime by weight of dry cement is added to the OPC, in order to increase the oleophilicity and bitumen-bonding properties of the cement coating.

Alternatively, the amount of added lime may be as small as 0 - 3 wt % for use on roads, but may be more for other applications.

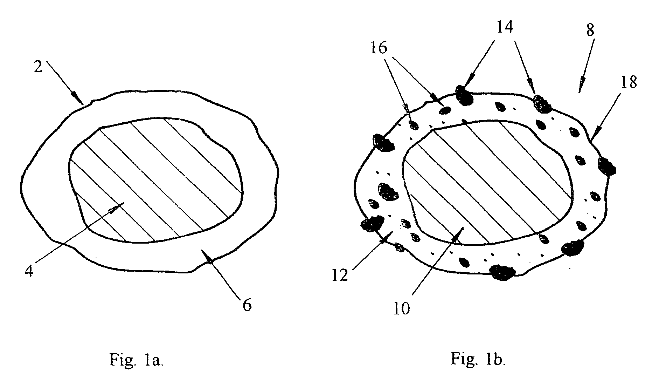

In an alternative embodiment additional fine aggregate, e.g. sand, with a particle size of 75 µm - 2.36 mm or 75 µm - 3.35 mm (e.g. 300 µm - 3.35 mm and/or 75 - 300 µm) is also added to the mix in various proportions to increase the roughness and interlocking characteristics of the final coated aggregate (see below). This additional fine particulate matter (14,16) can be encapsulated within (16) or project from (14) the surface (18) of the final dried coating (12), as shown in Fig. 1b.

In an advantageous embodiment, a setting accelerator additive is used in the mixture to decrease the setting time of the cement. A setting accelerator containing organic and inorganic complex-forming agents such as Sika^{®}Rapid2, produced by Sika AG, Tüffenwies 16, 8048 Zürich, Switzerland, is an ideal additive for this purpose and should reduce initial setting times to as little as about 20 mins. Sika^{®}Rapid-2 is also a hardening accelerator and increases the early strength of the cement in the 6 - 24 hr period after coating.

In another embodiment a superplasticizer and/or hardening accelerator is added in addition to or instead of the setting accelerator to improve cement dispersion, and to improve the high early strength of the cement in (for example) the 8 - 24 hr period after coating, respectively. A suitable commercially available superplasticizer and hardening accelerator combination is the Sikament^{®} HE 200 concrete admixture product produced by Sika AG, Switzerland, which contains a blend of synthetic dispersing and complex forming agents, namely sulphonated melamine-methanal condensate (melamine triaminotriazine) and salts of thiocyanic acid.

In all embodiments, after the aggregate, cement, any additives and the water have been mixed, the coated aggregate mixture is poured onto a rotating or vibrating sieve while still wet. Alternatively, the mixture is poured onto a stack of multiple vibrating sieves with a gradually decreasing sieve opening size as one passes down the stack (e.g. 50 mm, 37.5 mm, 28 mm, 14 mm. 6.3 mm, 3.35 mm and 2.36 mm mesh size sieves). In each case, the coated aggregates which are retained on each (or the) sieve are directed towards or dropped onto a vibrating conveyor. Where a stack of sieves is used, there is provided one vibrating conveyor for each of the sieves of the stack of vibrating sieves. In this way, the coated aggregates are generally separated into different product lines with different coated particle size ranges, e.g. 3.35 - 6.3 mm, 6.3 - 14 mm, 14 - 28 mm, 28 - 37.5 mm and 37.5 - 50 mm which are the size ranges for coarse aggregate for road construction purposes specified in British Standard BS 4987 Part 1, 1993. Fine coated aggregates of ≤ 3.35 mm coated particles size (e.g. 300µm - 3.35 mm, and/or 75 - 300 µm) can also be separated in the same way.

The coated aggregate will of course have a larger particle size than the original aggregate. In this way, aggregate of < 3.35 mm particle size (e g. 2.36 - 3.35 mm) can be converted into coated aggregate of ≥ 3. 35 mm coated particle size and therefore will become suitable for use in road construction under BS 4987.

Instead of dropping the mixture onto a stack of sieves and then conveying separated fractions, it is also possible (though less preferable) to pour the whole mixture onto a single vibrating conveyor and separate the coated aggregates after conveying. In the present embodiment, however, the mixtures are separated by sieves initially, differently sized fractions conveyed separately (if necessary), and then the set or part-set coated aggregate re-sized after conveying in a second sieving stage. This second sieving stage also helps to reduce the number of "lumps", containing more than one coarse aggregate particle, which may have been formed.

It is noted that the vibrating and separating action of the sieves before conveying, as well as the vibrating action of the conveyor, helps to ensure that each particle of coated aggregate is separated from other particles, and that less "lumps", containing more than one coarse aggregate particle (i.e. of ≥ 3.35 mm uncoated size), are formed.

The conveying time, from initial sieving to final deposit into a hopper, should be long enough to allow the coating of cement paste to reach its initial setting either fully or partly before final deposit in the hopper. For example, if a setting accelerator (e.g. Sika^{®}Rapid-2, described above) is used in the cement, then a conveying time of about 20 minutes should allow the cement coating to set sufficiently before deposit into a hopper. A longer conveying time, or deposit from the conveyor onto large drying sheets, will be necessary if OPC (drying time about 2 - 4 hrs) or rapid-hardening cement (drying time about 2 - 3 hours) are used without the above additives, to avoid excessive "lump" formation when part-set coated aggregate is deposited in a storage hopper.

After the initial setting time of the cement, a standard curing process is used, e.g. dropping the coated aggregate into water.

The dried coated aggregates can have a cement coating with an average thickness of 0. 1 - 6 mm, but more usually the average thickness of the dried cement coating is 0.5 - 3 mm.

The coated aggregates have advantageous roughness, shear resistance (interlocking), and bitumen adsorbence properties as disclosed in the following test results.

### TEST RESULTS (illustrate some aspects of the invention)

Some examples of tests made on the materials of the present invention are now given which demonstrate the potential advantages of the present cement coated aggregates over existing materials.

Some of the advantages of the coated aggregates are shown in the drawings attached hereto in which:

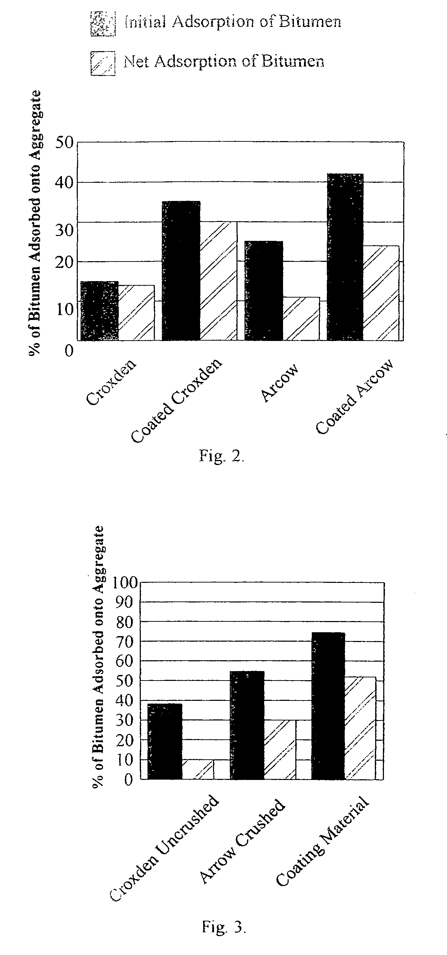

Figure 2 represents a comparison of the bitumen adsorption properties of coated and uncoated aggregate of a single particle size (2.36 mm before coating);
Figure 3 represents a comparison of the bitumen adsorption properties of graded uncoated aggregates and graded crushed coating material (75 µm - 2.36 mm particle size);

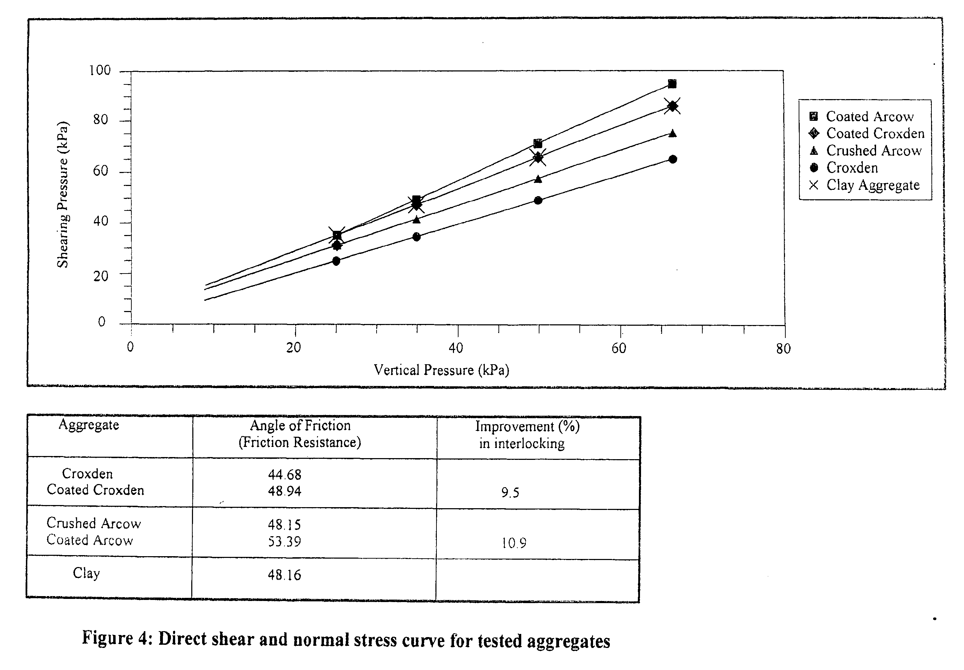

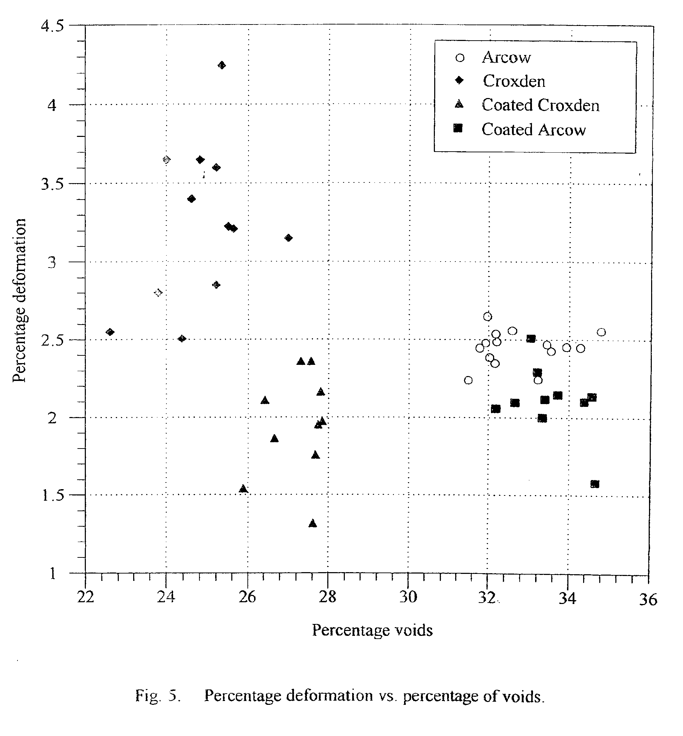

Figure 4 is a direct shear and normal stress curve showing the interlocking properties of various tested aggregates (2.36 - 20 mm particle size before coating), as measured by the shear box method.

### Affinity between various asphalts and coated and uncoated aggregates

The methods of testing chemically for the affinity between various asphalts and aggregates, as used in the USA Strategic Highways Research Programme (see Curtis reference 1.2 hereinabove), have been performed at Liverpool John Moores University on various premium and poor quality aggregates, both with and without the new coating to form a comparison The test method used (Curtis - ref 1.2 above) measures the initial adsorption of bitumen by the test materials at the beginning of each test. The test is an accelerated weathering test, during which bitumen is gradually desorbed from the material surface to generate a net bitumen adsorbency figure at the end of the test. This net bitumen adsorbence is the important figure as it includes the weathering and bitumen loss effects seen during the standard lifespan of road surfaces containing bitumen and aggregate.

For the tests, two aggregates were chosen: a crushed quarried rock "Arcow" and a smooth rounded land-won uncrushed natural gravel "Croxden". Both of these aggregates have very different surface properties but very similar density, aggregate impact value (AIV) and aggregate crushing value (ACV). Arcow represents high quality road stone used in the pavement industry, whilst Croxden represents natural gravels currently considered unusable.

Tests were performed firstly on finely graded samples of each aggregate and the coating material alone (which comprised ordinary Portland cement and which was checked to ensure that no aggregate material was included), as shown in Fig. 3.

Further tests were then conducted on single sized samples 2.36 mm) of aggregate in its pure state and with the OPC coating applied as described above: see Fig. 2.

In Figs. 2 and 3 it can be seen that adsorption of bitumen in Fig. 3 is nearly double the amount in Fig. 2. That is because the graded sample in Fig. 3 (75 µm - 2.36 mm particle size) with many fine particles has a larger surface area available for adsorption. Graded samples are considered better for comparison than single sized samples because they represent the whole grading as found in any normal asphalt mix.

Fig. 3 shows the ranking of performance of the two uncoated aggregates and the pure coating material tested. It can be seen that the uncoated aggregates in ascending order of chemical performance are as follows:- Croxden gravel has a lower net bitumen absorbance (9.9%), while Arcow has a higher net bitumen absorbance (29.7%). This ranking correlates with the performance expected if these aggregates were used to make road pavement. It can be seen that the net bitumen adsorption of the coating material is nearly 79% better than the best aggregate (Arcow) with a net absorbance value of 53. 1 %.

The comparison of coated and uncoated aggregates, whose result is shown in Fig. 2, was performed on single sized particle samples (2.36 mm before coating, if any). A graded sample with particle sizes (before coating, if any) increasing from 2.36 mm up to a maximum of 14 mm was also considered.

The results in Fig. 2 show that when coating is applied to an aggregate, the net adsorption is improved by on average 110%. In this test the improvement in net bitumen adsorption for Croxden and Arcow was 93.8 % and 125.3 % respectively. This had the effect of bringing two different aggregates up to a similar level of bitumen/aggregate interaction performance.

The improvement evidenced in the above results shows that at both micro and macrostructure levels the coating shows significant improvement. This suggests that when aggregates are coated, their initial bond with bitumen (reflected in the initial absorbance figures) and their resistance to stripping and ageing (reflected in the net absorbance figures) is significantly enhanced because of the change in surface micro and macrostructure.

More importantly, bitumen absorbance is enhanced because coating the aggregate with (lime-rich) cement makes the coated aggregate surface more oleophilic, i.e. more similar to a lime-rich (uncoated) aggregate, and hence more likely to bond well with bitumen.

### Roughness, friction (interlocking) and shear resistance

At a macrostructure level, the cement coating changes the surface texture. The surface does become measurably rougher.

Table shows roughness measurements of uncoated and coated Croxden and Arcow aggregates, as measured using a Uniscan optical surface profile instrument made by Uniscan Instruments, Buxton, UK. The aggregate particle size range used was 2.36 - 20 mm (before coating, if any). Coated aggregates were prepared as described above.

**TABLE 1**

| Roughness of tested aggregates | | |
|---|---|---|
| Aggregate Type | Roughness (µm) | Average Roughness (µm) |
| Uncoated Croxden | | |
| 1 | 85.74 | |
| 2 | 82.74 | 85.7 |
| 3 | 89.38 | |

| Coated Croxden | | |
|---|---|---|
| 1 | 124.75 | |
| 2 | 168.78 | 140.8 |
| 3 | 128.97 | |

| Uncoated Arcow | | |
|---|---|---|
| 1 | 112.11 | |
| 2 | 117.05 | 111.3 |
| 3 | 104.75 | |

| Coated Arcow | | |
|---|---|---|
| 1 | 276.22 | 336.0 |
| 2 | 340.27 | |
| 3 | 391.56 | |

| Clay-made Aggregates | | |
|---|---|---|
| 1 | 115.62 | |
| 2 | 118.35 | 118.21 |
| 3 | 120.68 | |

In Table 1, for each of the five types of aggregate used, three samples were taken for roughness measurements, and an average value determined for each aggregate type. For Croxden (the natural uncrushed aggregate), the roughness changed from an average of 85.7 µm (uncoated) to 140.8 µm (coated), an improvement of 64%. Generally, coated natural uncrushed aggregate has an average roughness in the range of 125 - 200 µm or more usually in the range of 125 - 180 µm.

The roughness of the crushed aggregate commonly used in pavement mixes (Arcow) increased from an average of 111.3 µm (uncoated) to 336.0 µm (coated). Generally, coated crushed aggregate has an average roughness of 200 - 400 µm. If fine aggregate (e.g. sand) is present in the mix, the average roughness is generally ≥ 400 µm (not shown), because some of the fine aggregate will project from the surface of the coating, increasing the angularity of the coated aggregate.

Fig. 4 shows that the gap in the performance between the interlocking properties of crushed rock (e.g. Arcow) and rounded natural uncrushed gravel (e.g. Croxden) is bridged by coating the aggregates with cement as hereinbefore described. Fig. 4 shows the shear resistance properties, as measured by the shear box method, of graded aggregates with a particle size (before coating, if any) of 2.36 - 20 mm.

In Fig. 4, the coefficient of friction (angle of friction) of the coated aggregates improved by 9.5% (from 44.68% to 48.94%) and by 10.9 % (from 48.15% to 53.39%) compared to the uncoated aggregates, for the natural aggregate and crushed aggregate respectively. It is interesting to see that the interlocking and shearing resistance properties of the coated natural uncrushed aggregate and the coated crushed aggregate are substantially the same and are an improvement over the uncoated crushed aggregate (which already has sufficient shearing resistance to be suitable for road use).

This improvement in the interlocking and shearing resistance of the modified aggregates indicates that asphalt made of the coated aggregate should exhibit either the same stability as those mixes which contain crushed aggregate or an even better performance under the impact of both traffic and environmental conditions.

The above test results show that applying a cement paste, or cement paste containing strong particles, with or without applied additives, in accordance with the present invention, enables aggregates of low quality, such as natural (uncrushed), artificial, recycled and crushed rock aggregates to be brought up to a recognised standard for use in pavement construction. It also enables aggregate already of an acceptable quality to have its performance enhanced.

Coated aggregates can have improved strength, interlocking characteristics and durability. Mixes made with these types of aggregate become more durable, stable under the action of traffic loads, and have longer design lives than those based on uncoated natural aggregates. The results from chemical tests and other laboratory tests such as repeat load axial, repeat load indirect tensile, and wheel tracking tests show that coating containing cement, such as Ordinary Portland Cement (OPC), enables increased percentages of binder to be retained on the aggregates. Thus, the disadvantage of unacceptable aggregates which require less binder (which is not desirable as the finished product would quickly age and become brittle) is mitigated.

Instead, the coated aggregates described herein have the advantages of reducing the ageing and long term brittleness of the final product.

The coated aggregates of the present invention are also more environmentally friendly, as described above.

## Claims

1. A particulate material for use in flexible pavement construction, bituminous material products and other construction, comprising aggregate particles which have a coating, where;
• the coating comprises a set mixture of cement, limes, water and additional particulate matter where;
• the aggregate particles comprise natural uncrushed aggregate, recycled aggregate, crushed aggregate or artificial aggregate, and where;
• the coating has a total limes content of > 64 to 67 wt% of the total dry weight of the cement and additives in the coating, where the addition of lime in the coating paste maximises oleophilicity of the coating material, and where;
• the additional particulate matter in the coating includes small additional hard particles such as sand with particle size of 0.075µm to 3.35 mm encapsulated within the cement in the coating, around the aggregate core or projecting from the surface.

2. A particulate material as claimed in claim 1, wherein the natural uncrushed aggregate comprises natural gravel.

3. A particulate material as claimed in any one of claims 1 and 2, including coated particles containing only one aggregate particle.

4. A particulate material as claimed in any one of claims 1 to 3, wherein the aggregate particles include those with a particle size within the range of ≥ 2.36 mm to 50mm excluding the coating.

5. A particulate material as claimed in any one of the preceding claims, wherein the coating substantially completely surrounds the aggregate particles, and the coating has an average thickness varying between 0. 1 mm to 6 mm.

6. A particulate material as claimed in any one of the preceding claims, wherein the aggregate particles can also be mixed with microsilica and/ or Pulverised Fuel Ash (PFA), or with a setting accelerator, a superplasticizer and /or a hardening accelerator.

7. A particulate material as claimed in any one of the preceding claims, wherein the cement is Portland cement or Rapid- hardening cement.

8. A particulate material as claimed in any one of the preceding claims, wherein the coating may comprises a setting accelerator, a superplasticizer and/or a hardening accelerator, comprising a mixture of organic complex- forming agents.

9. A method of making a particulate material as defined in any one of the claims 1 to 8, comprising the mixing of aggregate particles with a coating of cement paste which contains additional particulate matter and lime, and allowing the cement coating to reach its initial setting and then mixing the said particulate material with an asphalt and/ or bitumen binder for use in construction.

10. A method as claimed in any one of the previous claims, comprising mixing the aggregate particles with the cement, water, additional matter, lime and additional microsilica and/or Pulverised Fuel Ash(PFA), where 1% - 12% by weight of dry cement powder used in the coating of microsilica and/ or PFA are added, and allowing the cement coating to reach its initial setting, and then mixing the said coated particulate material with an asphalt and or bitumen binder for use in construction.

11. A method as claimed in any one of claims 10 and 11, wherein the coated aggregate particles are separated before the cement coating is allowed substantially to reach its initial setting, wherein the coated aggregate particles are separated by passing through or over one or more rotating and/or vibrating sieves or a conveyor before the cement is allowed substantially to reach its initial setting, wherein the conveyor may vibrate in such a way as to aid separation of the coated aggregate particles from adjacent coated aggregate particles for a time sufficient to allow the coating to reach its initial setting at least partially, dry cement and/or accelerating powder is added to the coated aggregate particles, while they are still on the conveyor.

12. The use in construction of a particulate material comprising aggregate particles according to claims 1-8, having a coating bonded to an asphalt and/or bitumen, wherein the coating comprises a set mixture of cement, added lime, water and additional particulate matter, and wherein the aggregate particles comprise natural uncrushed aggregate, crushed aggregate, recycled aggregate or artificial aggregates.

13. The use of particulate materials as described in claim 12 in construction after mixing the said coated aggregate particles with an asphalt and/ or binder at roadside, construction site and at a plant.

## Patentansprüche

1. Partikelmaterial zur Verwendung beim Bau von elastischem Straßenpflaster, in Bitumenmaterialprodukten und bei anderen Bauerstellungen, wobei das Partikelmaterial Granulatpartikel mit einer Beschichtung umfasst, wobei:
• die Beschichtung eine bestimmte Mischung aus Zement, Kalk, Wasser und zusätzlichem Partikelmaterial umfasst, wobei
• die Granulatpartikel natürliches unzerdrücktes Granulat, recyceltes Granulat, zerdrücktes Granulat oder künstliches Granulat umfassen und wobei
• die Beschichtung einen Gesamtkalkgehalt von > 64 bis 67 Gew.-% des Gesamttrockengewichts des Zements und der Additive in der Beschichtung aufweist, wobei der Zusatz von Kalk in der Beschichtungspaste die Öllöslichkeit des Beschichtungsmaterials maximiert und wobei
• das zusätzliche Partikelmaterial in der Beschichtung zusätzliche kleine harte Partikel, wie beispielsweise Sand, mit einer Partikelgröße von 0,075 µm bis 3,35 mm umfasst, die innerhalb des Zements um den Granulatkern herum oder von der Oberfläche hervorstehend in der Beschichtung verkapstelt sind.

2. Partikelmaterial nach Anspruch 1, wobei das natürliche unzerdrückte Granulat natürlichen Kies umfasst.

3. Partikelmaterial nach einem der Ansprüche 1 und 2, das beschichtete Partikel umfasst, die nur einen einzelnen Granulatpartikel enthalten.

4. Partikelmaterial nach einem der Ansprüche 1 bis 3, wobei die Granulatpartikel solche mit einer Partikelgröße im Bereich von ≥ 2,36 mm bis 50 mm umfassen, wobei die Beschichtung ausgeschlossen ist.

5. Partikelmaterial nach einem der vorhergehenden Ansprüche, wobei die Beschichtung die Granulatpartikel im Wesentlichen vollständig umgibt und die Beschichtung eine durchschnittliche Dicke von 0,1 mm bis 6 mm aufweist.

6. Partikelmaterial nach einem der vorhergehenden Ansprüche, wobei die Granulatpartikel ebenfalls mit Mikrokieselerde und/oder Flugasche (PFA) oder mit einem Erstarrungsbeschleuniger, einem Superweichmacher und/oder einem Härtungsbeschleuniger gemischt werden können.

7. Partikelmaterial nach einem der vorhergehenden Ansprüche, wobei der Zement Portlandzement oder Schnellzement ist.

8. Partikelmaterial nach einem der vorhergehenden Ansprüche, wobei die Beschichtung einen Erstarrungsbeschleuniger, einen Superweichmacher und/oder einen Härtungsbeschleuniger umfassen kann, der eine Mischung aus organischen Komplex bildenden Mitteln umfasst.

9. Verfahren zur Herstellung eines Partikelmaterials nach einem der Ansprüche 1 bis 8, das Folgendes umfasst: die Mischung von Granulatpartikeln mit einer Beschichtung aus Zementpaste, die zusätzliches Partikelmaterial und Kalk enthält, Warten, bis die Zementbeschichtung ihre anfängliche Erstarrung erreicht und daraufhin Mischen des Partikelmaterials mit einem Asphalt- und/oder Bitumenbindemittel zur Verwendung bei der Bauerstellung.

10. Verfahren nach einem der vorhergehenden Ansprüche, das Folgendes umfasst: Mischen der Granulatpartikel mit dem Zement, Wasser, zusätzlichem Material, Kalk und zusätzlicher Mikrokieselerde und/oder Flugasche (PFA), wobei 1 bis 12 Gew.-% Trockenzementpulver, das bei der Beschichtung von Mikrokieselerde und/oder PFA verwendet wird, hinzugefügt wird, und Warten, bis die Zementbeschichtung ihre anfängliche Erstarrung erreicht und daraufhin Mischen des beschichteten Partikelmaterials mit einem Asphalt- und/oder Bitumenbindemittel zur Verwendung bei der Bauerstellung.

11. Verfahren nach einem der Ansprüche 10 und 11, wobei die beschichteten Granulatpartikel getrennt werden, bevor gewartet wird, dass die Zementbeschichtung im Wesentlichen ihre anfängliche Erstarrung erreicht, wobei die beschichteten Granulatpartikel getrennt werden, indem sie durch oder über ein oder mehrere rotierende und/oder vibrierende Siebe oder eine Förderanlage geleitet werden, bevor gewartet wird, dass der Zement im Wesentlichen seine anfängliche Erstarrung erreicht, wobei die Förderanlage in einer Weise vibrieren kann, dass die Trennung der beschichteten Granulatpartikel von benachbarten beschichteten Granulatpartikeln unterstützt wird, und zwar für eine Zeit, die ausreicht, um der Beschichtung zu ermöglichen, ihre anfängliche Erstarrung mindestens teilweise zu erreichen, wobei Trockenzement und/oder Beschleunigungspulver zu den beschichteten Granulatpartikeln hinzugefügt wird, während sie sich noch auf der Förderanlage befinden.

12. Verwendung eines Partikelmaterials nach Anspruch 1 bis 8 bei der Bauerstellung, das Granulatpartikel umfasst, die eine Beschichtung aufweisen, die an einen Asphalt und/oder Bitumen gebunden ist, wobei die Beschichtung eine bestimmte Mischung aus Zement, hinzugefügtem Kalk, Wasser und zusätzlichem Partikelmaterial umfasst, und wobei die Granulatpartikel natürliches unzerdrücktes Granulat, zerdrücktes Granulat, recyceltes Granulat oder künstliche Granulate umfassen.

13. Verwendung von Partikelmaterialien nach Anspruch 12 bei der Bauerstellung, nachdem die beschichteten Granulatpartikel am Straßenrand, auf der Baustelle und auf einem Betriebsgelände mit einem Asphalt und/oder Bindemittel gemischt wurden.

## Revendications

1. Matériau particulaire destiné à être utilisé dans la construction des chaussées souples, dans les produits pour enrobés bitumeux et dans d'autres constructions, comprenant des éléments d'agrégat qui comportent un enrobage, où :
• l'enrobage comprend un mélange déterminé de ciment, de chaux, d'eau et de matière particulaire supplémentaire où :
• les éléments d'agrégat comprennent un agrégat naturel non concassé, un agrégat recyclé, un agrégat concassé ou un agrégat artificiel, et où :
• l'enrobage a une teneur totale en chaux > à 64 jusqu'à 67 % en poids du poids sec total du ciment et des additifs présents dans l'enrobage, où l'ajout de chaux dans la pâte d'enrobage maximise l'oléophilicité du matériau d'enrobage, et où :
• la matière particulaire supplémentaire présente dans l'enrobage inclut des particules dures supplémentaires de petite taille telles que du sable avec une taille de particules de 0,075 µm à 3,35 mm encapsulées à l'intérieur du ciment dans l'enrobage, autour du coeur de l'agrégat ou en dépassant de la surface.

2. Matériau particulaire selon la revendication 1, dans lequel l'agrégat naturel non concassé se compose de gravier naturel.

3. Matériau particulaire selon l'une quelconque des revendications 1 et 2, qui inclut des particules enduites contenant seulement un élément d'agrégat.

4. Matériau particulaire selon l'une quelconque des revendications 1 à 3, dans lequel les éléments d'agrégat incluent ceux avec une taille de particules ≥ à 2,36 mm jusqu'à 50 mm en excluant l'enrobage.

5. Matériau particulaire selon l'une quelconque des revendications précédentes, dans lequel l'enrobage entoure pratiquement complètement les éléments d'agrégat, et l'enrobage a une épaisseur moyenne variant entre 0,1 mm à 6 mm.

6. Matériau particulaire selon l'une quelconque des revendications précédentes, dans lequel les éléments d'agrégat peuvent également être mélangés avec de la microsilice et/ou des cendres volantes (PFA), ou avec un accélérateur de prise, un superplastifiant et/ou un accélérateur de durcissement.

7. Matériau particulaire selon l'une quelconque des revendications précédentes, dans lequel le ciment est le ciment de Portland ou du ciment Portland à haute résistance initiale.

8. Matériau particulaire selon l'une quelconque des revendications précédentes, dans lequel l'enrobage peut comprendre un accélérateur de prise, un superplastifiant et/ou un accélérateur de durcissement, en comprenant un mélange d'agents organiques formant des complexes.

9. Procédé de fabrication d'un matériau particulaire selon l'une quelconque des revendications 1 à 8, comprenant le mélange d'éléments d'agrégat avec un enrobage de pâte pure de ciment qui contient une matière particulaire supplémentaire et de la chaux, et permettant l'obtention du début de la prise de l'enrobage de ciment, et mélangeant ensuite ledit matériau particulaire avec un asphalte et/ou un liant bitumeux en vue de son utilisation dans la construction.

10. Procédé selon l'une quelconque des revendications précédentes, comprenant le mélangeage des éléments d'agrégat avec le ciment, de l'eau, de la matière supplémentaire, de la chaux et de la microsilice supplémentaire et/ou des cendres volantes (PFA), où 1 % à 12 % en poids de poudre sèche de ciment utilisée dans l'enrobage de microsilice et/ou de PFA sont ajoutés, et permettant l'obtention du début de la prise de l'enrobage de ciment, et mélangeant ensuite ledit matériau particulaire enduit avec un asphalte et/ou un liant bitumeux en vue de son utilisation dans la construction.

11. Procédé selon l'une quelconque des revendications 10 et 11, dans lequel les éléments d'agrégat enduits sont séparés avant de permettre pratiquement l'obtention du début de la prise de l'enrobage de ciment, dans lequel les éléments d'agrégat enduits sont séparés en les passant à travers ou sur un ou plusieurs tamis rotatifs et/ou vibrants ou sur un convoyeur avant de permettre pratiquement l'obtention du début de la prise du ciment, dans lequel le convoyeur peut vibrer de sorte qu'il facilite la séparation des éléments d'agrégat enduits des éléments d'agrégat enduits adjacents pendant un temps suffisant pour permettre l'obtention du début de la prise au moins partielle de l'enrobage, le ciment sec et/ou la poudre d'accélérateur étant ajoutés aux éléments d'agrégat enduits alors qu'ils sont toujours sur le convoyeur.

12. Utilisation dans la construction d'un matériau particulaire selon les revendications 1 à 8, qui comprend des éléments d'agrégat comportant un enrobage lié à un asphalte et/ou à un bitume, dans lequel l'enrobage comprend un mélange déterminé de ciment, de chaux ajoutée, d'eau et de matière particulaire supplémentaire, et dans lequel les éléments d'agrégat comprennent un agrégat naturel non concassé, un agrégat concassé, un agrégat recyclé ou des agrégats artificiels.

13. Utilisation de matériaux particulaires selon la revendication 12, dans la construction après le mélangeage desdits éléments d'agrégat enduits avec un asphalte et/ou un liant sur un accotement de route, sur un site de construction ou dans une usine.
